# EUROPÄISCHE PATENTSCHRIFT

(11) **EP 3 269 829 B1**
(45) Veröffentlichungstag und Bekanntmachung des Hinweises auf die Patenterteilung: **10.07.2019**
(21) Anmeldenummer: 17175352.8
(22) Anmeldetag: 09.06.2017
(51) Int. Cl.: B23K 26/354, B23K 103/00, B23K 26/082, B23K 26/352, C14B 1/56, B23K 26/00

(54) **VERFAHREN UND VORRICHTUNG ZUM AUFBRINGEN EINES CODES AUF EINE UNBEHANDELTE ODER BEHANDELTE TIERHAUT**
METHOD AND DEVICE FOR APPLYING A CODE TO AN UNTREATED OR TREATED ANIMAL SKIN
PROCÉDÉ ET DISPOSITIF D'APPLICATION D'UN CODE SUR UNE PEAU D'ANIMAL TRAITÉE OU NON TRAITÉE

(30) Priorität: 13.07.2016 DE 102016112878
(43) Veröffentlichungstag der Anmeldung: 17.01.2018
(73) Patentinhaber: SLCR Lasertechnik GMBH, 52353 Düren (DE)
(72) Erfinder:
(74) Vertreter: Albrecht, Ralf

(56) Entgegenhaltungen:
- EP-A1- 0 495 647
- EP-A2- 1 705 600
- WO-A-03/038132
- WO-A1-2011/019812
- WO-A1-2011/143471
- DD-A1- 247 831
- US-A- 3 916 143
- US-A- 5 262 613
- US-A- 5 990 444
- US-A1- 2012 192 598
- US-A1- 2015 344 980
- US-B2- 6 315 202

## Beschreibung

Die Erfindung betrifft ein Verfahren zum Aufbringen eines Codes auf eine unbehandelte oder behandelte Tierhaut, bei dem eine von einem Tier abgetrennte, zu codierende Tierhaut bereitgestellt wird, der Tierhaut ein eindeutiger Code zugeordnet wird und der zugeordnete Code auf die Tierhaut aufgebracht wird. Des Weiteren betrifft die Erfindung eine Vorrichtung zum Aufbringen eines Codes auf eine unbehandelte oder behandelte Tierhaut.

Die Nachverfolgbarkeit von Produkten tierischen Ursprunges stellt in einer Vielzahl von Bereichen eine wichtige Anforderung dar. Dies gilt nicht nur für diejenigen Teile von Tieren, die nach dem Schlachten als Lebensmittel Verwendung finden, sondern beispielsweise auch für Teile, die zu Leder verarbeitet werden.

Zu Lebzeiten der Tiere, bei denen es sich u.a. um Rinder oder Schweine handeln kann, wird die Nachverfolgbarkeit durch eine Markierung der einzelnen Tiere gewährleistet. Als Markierungen kommen zum Beispiel Ohrmarken zu Einsatz, die an den Tieren angebracht werden und einen dem jeweiligen Tier zugeordneten Code aufweisen. Alternativ zu Ohrmarken ist es bekannt, Tiere mit Aufklebern zu versehen, die mit dem zugeordneten Code bedruckt sind. Schließlich besteht eine weitere bekannte Möglichkeit darin, einen Code unmittelbar auf die Fell- oder Hautoberfläche der Tiere mit Hilfe von Tinte oder geeigneten Farbstoffen aufzubringen.

Vor allem bei der weiteren Verarbeitung der Tierhäute im Anschluss an den Schlachtvorgang haben sich die vorgenannten Markierungsmöglichkeiten jedoch als problematisch herausgestellt. Ohrmarken oder Aufkleber müssen in der Regel entfernt werden, da sie nicht mit den verschiedenen Prozessen, denen eine Tierhaut vom Rohzustand bis zum Erhalt von Leder unterzogen werden muss, kompatibel sind. Selbst wenn sie grundsätzlich nicht entfernt werden müssten, gehen sie im Laufe der Bearbeitung von Tierhäuten häufig verloren, so dass eine zuverlässige Markierung und somit nachverfolgbare Herkunft der Tierhäute nicht gewährleistet ist. Auch die unmittelbar auf dem Fell oder der Haut aufgetragenen Tinten- beziehungsweise Farbstoff-Codes bieten keine Alternative, da sie infolge der Bearbeitung der Tierhäute unleserlich werden können.

Um Produkte, die aus Tierhäuten gefertigt werden über die gesamte Zeitdauer von der Geburt des Tieres über die Schlachtung bis hin zur Fertigstellung aller Verarbeitungsschritte hinsichtlich ihrer Herkunft verfolgbar zu machen, muss eine zuverlässige Markierung über die gesamte Zeitdauer gewährleistet werden.

Ein Versuch, die Herkunftsverfolgung auch für die Tierhäute zu gewährleisten bestand darin, diese im Anschluss an den Schlachtvorgang unter Durchführung eines Prägeverfahrens, bei dem die Codes mechanisch in die Tierhaut eingeprägt werden oder eines Stanzverfahrens, bei dem durch mechanisch hohen Druck Stanzzahlen in die Haut eingepresst werden, zu markieren. An letzterer Lösung wird jedoch teilweise als problematisch angesehen, dass durch das Stanzen Löcher in der Tierhaut entstehen, welche auch in dem aus den Tierhäuten hergestellten Leder vorliegen. Hierdurch wird die Verwendbarkeit des Leders eingeschränkt.

Darüber hinaus ist für jede einzelne Tierhaut aufgrund des Eindeutigkeitserfordernisses der Codes eine Anpassung des Stanzwerkzeugs erforderlich, womit ein nicht unerheblicher Aufwand einhergeht. Bei der Codierung durch Prägung hingegen besteht - wie bei den Markierungen mittels Tinte und/oder Farbstoffen - die Problematik, dass die Codes infolge der sich anschließenden Verarbeitungsschritte verloren gehen oder zumindest unleserlich werden.

Die WO 2011/019812 A1 offenbart die Lasergravur von Lederartikeln.

Aus der US 2015/0344980 A1 gehen ein Verfahren und ein System zum Sortieren von Tierhäuten hervor. Dabei wird auch vorgeschlagen, Tierhäute zu markieren, wobei ein Laserdrucker zum Einsatz kommen kann.

Die US 3,916,143 und die DD 247831 A1 offenbaren Verfahren zur Kennzeichnung von lebenden Tieren mittels Laserstrahlung.

Darüber hinaus offenbart die WO 03/038132 A1, dass eine Folge von Löchern in eine Tierhaut eingestanzt wird, die zu einem eindeutigen Identifizierungscode korrespondiert. Zur Herstellung der Löcher kommt eine Lochformeinrichtung zum Einsatz, die ein Lasermesser umfassen kann und Teil einer Stanzanordnung bildet.

Ausgehend von diesem Stand der Technik ist es daher eine Aufgabe der vorliegenden Erfindung, ein Verfahren der eingangs genannten Art bereitzustellen, welches es ermöglicht, im Anschluss an den Schlachtprozess eines Tieres einen Code auf die insbesondere noch völlig unbehandelte Tierhaut aufzubringen, der bei den sich anschließenden Bearbeitungsprozessen der Tierhaut nicht verloren geht. Gleichzeitig soll sich das Verfahren einfach, zuverlässig und mit geringem Zeitaufwand durchführen lassen und mit einer möglichst geringen Beschädigung der Tierhaut verbunden sein. Darüber hinaus ist es eine Aufgabe der vorliegenden Erfindung, eine Vorrichtung anzugeben, welche das Aufbringen eines solchen Codes auf eine insbesondere unbehandelte Tierhaut ermöglicht.

Diese Aufgabe wird bei einem Verfahren der eingangs genannten Art dadurch gelöst, dass die Tierhaut wenigstens einem Laserstrahl derart ausgesetzt wird, dass der zugeordnete Code mittels des wenigstens einen Laserstrahls in die Tierhaut eingebrannt wird. Es hat sich herausgestellt, dass unter Verwendung von Laserstrahlung ein Code in eine insbesondere unbehandelte Tierhaut eingebrannt bzw. eingraviert werden kann, der sich durch eine hervorragende Haltbarkeit auszeichnet und alle Verarbeitungsschritte, welche sich an die Häutung anschließen und durch die insbesondere aus roher Tierhaut Leder erhalten wird, derart übersteht, dass er am Ende der Verarbeitungskette noch in einem durch einen Menschen oder eine Ausleseeinrichtung gut erkennbaren Zustand bereitsteht. Es kann ein unverlierbarer Code zuverlässig auf Tierhäute aufgebracht werden. Da unter der erfindungsgemäßen Verwendung von Laserstrahlung eine Markierung erhalten wird, die auch nach Absolvierung aller sich an die Häutung anschließenden Behandlungsschritte vorhanden und gut lesbar ist, wird es erstmals möglich, die Herkunft von Tierhaut auch nach der Verarbeitung eindeutig bestimmen zu können. Somit werden Produkte aus Tierhaut, insbesondere Lederprodukte mit höchster Zuverlässigkeit über die gesamte Verarbeitungskette bis hin zum einzelnen Tier lückenlos rückverfolgbar gemacht.

Dabei bietet die Verwendung von Laserstrahlung neben der hervorragenden Haltbarkeit des resultierenden Codes und der hohen erreichbaren Genauigkeit den weiteren Vorteil einer besonders kurzen Bearbeitungszeit. Eine Codierung, die beispielsweise eine Mehrzahl von Ziffern und/oder - im Falle eines Barcodes - mehrere Linien aufweist, kann beispielsweise in knapp unterhalb oder knapp oberhalb einer Sekunde in eine bereitgestellte Tierhaut eingebrannt werden. Dabei ist der erfindungsgemäße Einsatz von Laserstrahlung auch mit einer hohen Flexibilität und vergleichsweise geringem Aufwand verbunden. Um die Rückverfolgung gewährleisten zu können, muss auf jede Tierhaut ein individueller, sich von den Codes anderer Tierhäuten unterscheidender Code aufgebracht werden. Kommt Laserstrahlung zum Einsatz, muss hierfür lediglich von Tierhaut zu Tierhaut die Verfahrbahn - beispielsweise zur Änderung einer der einzubrennenden Ziffern eines Zahlencodes - wenigstens eines auf die Tierhaut gerichteten Laserstrahles angepasst werden, was computergestützt mit geringem Aufwand möglich ist. Eine aufwendige Anpassung des Werkzeuges - wie er beispielweise bei der Codierung durch Stanzen erforderlich ist - ist unnötig. Selbst ein Wechsel der Art des Codes - zum Beispiel von einem Zahlencode auf einen Barcode - ist jederzeit ohne Werkzeugwechsel möglich. Außerdem kann die Aufbringung eines Codes unter Verwendung von Laserstrahlung trocken, sauber, staubfrei und ohne Einsatz jeglicher Chemie berührungslos erfolgen. Ferner ist sie mit vergleichsweise geringen Betriebskosten verbunden, zeichnet sich also durch eine hohe Wirtschaftlichkeit aus.

Schließlich besteht ein weiterer großer Vorteil - insbesondere gegenüber den gestanzten Codes - darin, dass eine dauerhafte, zuverlässige Markierung mit Laserstrahlung derart erfolgen kann, dass eine nur oberflächliche Materialschädigung auf nur einer Seite der Tierhaut vorliegt, also die gegenüberliegende Seite der Tierhaut völlig unversehrt bleibt. Ein hochqualitatives Leder, welches nach Absolvierung diverser Verarbeitungsschritte aus einer Tierhaut erhalten wurde und die erfindungsgemäß aufgebrachte Markierung auf nur einer Seite aufweist, kann beispielsweise für den Bezug eines Autositzes vollständig verwendet werden, indem das Leder einfach derart orientiert wird, dass die Markierung innenseitig liegt. Bei einer Markierung durch Stanzen wäre dies nicht möglich, da das Leder im Bereich eines gestanzten Codes beidseitig zerstört wird.

Als Code kann beispielsweise eine Zahlenfolge oder auch ein Barcode oder eine Kombination aus einer Zahlenfolge und einem Barcode eingebracht werden. Im Falle einer Zahlenfolge können die einzelnen Ziffern insbesondere in digitaler Schreibweise, gemäß derer jede Ziffer durch eine bestimmte Anzahl einzelner Striche vorgegebener Größe dargestellt ist, ausgeführt werden. Selbstverständlich können neben Ziffernfolgen und Barcodes auch beliebige andere Zeichen zum Einsatz kommen, solange diese geeignet sind, eine Tierhaut eindeutig identifizierbar zu machen.

Die zu markierende bzw. zu codierende Tierhaut wird im Strahlengang des wenigstens einen Laserstrahls angeordnet, beispielsweise auf einer Aufnahmeeinrichtung in Form einer Plattform oder dergleichen. Die Plattform weist dann insbesondere eine zumindest in etwa horizontal ausgerichtete Oberseite auf, auf welcher die Tierhaut bzw. der Abschnitt flach gelegt und der Laserstrahlung ausgesetzt wird. Die Tierhaut kann dabei im oder nahe eines Fokus des wenigstens einen Laserstrahls positioniert werden, wofür die Aufnahmeeinrichtung, beispielsweise Plattform, entsprechend positioniert sein kann.

In vorteilhafter Ausgestaltung des erfindungsgemäßen Verfahrens ist vorgesehen, dass der der Tierhaut zugeordnete Code einem Code entspricht oder diesen repräsentiert, der dem zu der Tierhaut gehörigen Tier bereits zu Lebzeiten zugeordnet war. So kann beispielsweise der Code eines Tieres, der auf einer Ohrmarke oder dergleichen angeordnet was, eins zu eins für die erfindungsgemäße Markierung der Tierhaut mittels Laserstrahlung übernommen werden. Alternativ kann ein neuer Code, insbesondere auf Basis des dem Tier zugeordneten Codes generiert und auf die Tierhaut aufgebracht werden. Hierbei kann auch die Art der Codierung gewechselt werden, beispielsweise ausgehend von einem ursprünglichen Barcode eine entsprechende Zahlenfolge ermittelt und als Code auf die Tierhaut aufgebracht werden. Selbstverständlich ist es auch möglich, aus einem ursprünglich einem Tier zugeordneten Zahlencode einen anderen, neuen Zahlencode zu berechnen, so dass nur für denjenigen, welcher die Umrechnungsvorschrift kennt, unmittelbar erkennbar ist, von welchem Tier die Tierhaut stammt.

Der ursprüngliche Code, der dem zu der Tierhaut gehörigen Tier bereits zu Lebzeiten zugeordnet war, wird in bevorzugter Ausgestaltung mit geeigneten technischen Hilfsmitteln erfasst, und es wird basierend auf dem erfassten Code derjenige Code generiert, der auf die Tierhaut aufzubringen ist. Die Erfassung des ursprünglichen Codes kann sowohl vor als auch nach der Schlachtung, dann beispielsweise vor dem Häutungsprozess, erfolgen.

Eine weitere Ausführungsform des erfindungsgemäßen Verfahrens zeichnet sich dadurch aus, dass der Code in die Tierhaut im Anschluss an den Häutungsprozess und noch vor der Durchführung weiterer Verarbeitungsschritte der Tierhaut mittels des wenigstens einen Laserstrahls eingebrannt wird. Die Aufbringung erfolgt demgemäß, wenn die Tierhaut im Rohzustand vorliegt. Unter Rohzustand der Tierhaut ist dabei der Zustand direkt nach dem Häuten zu verstehen, in welchem sich in der Regel auf der einen Seite noch Fett an der Haut befindet und auf der anderen Seite - beispielsweise im Falle von Rindern - das Fell des Tieres.

Der Code kann beispielsweise auf der Oberseite der Tierhaut, welche zu Lebzeiten des Tieres die Haut- beziehungsweise die Felloberfläche gebildet hat, mittels des wenigstens einen Laserstrahles eingebrannt werden, was sich als besonders geeignet erwiesen hat.

Damit unter Verwendung von Laserstrahlung ein Code vorgegebener Form ohne Abweichungen in eine Tierhaut eingebrannt bzw. eingraviert werden kann, wird zweckmäßiger Weise ein Verrutschen der Tierhaut während der Aufbringung und/oder eine Faltenbildung verhindert. Hierzu kann vorgesehen sein, dass zumindest derjenige Bereich der Tierhaut, über welchen sich der zugeordnete Code erstrecken soll, vor der Aufbringung des Codes fixiert und/oder gespannt wird. Wird die Tierhaut bzw. deren zu markierenden Bereich auf einer Plattform bereitgestellt, kann die Tierhaut an der Plattform fixiert und/oder gespannt werden.

Die Parameter des wenigstens einen Laserstrahls werden erfindungsgemäß derart gewählt, dass der wenigstens eine Laserstrahl die Tierhaut nicht durchtrennt. Über eine geeignete Parameterwahl kann zuverlässig verhindert werden, dass durch die Code-Herstellung mittels Laserstrahlung Löcher in der Tierhaut - und somit in dem aus dieser herzustellenden Leder - erzeugt werden. Die Seite, welche derjenigen mit dem Code gegenüberliegt, bleibt dann völlig unversehrt und das Leder kann ohne Einschränkung beispielsweise für einen Autositz zum Einsatz kommen.

Es kann insbesondere vorgesehen sein, dass die Parameter des wenigstens einen Laserstrahls derart gewählt werden, dass sich im Bereich des hergestellten Codes eine laserbedingte Materialabtragung in der Tierhaut mit einer Tiefe zwischen 0,5 und 5 mm ergibt.

Rein beispielshaft seien für die Parameter des wenigstens einen Laserstrahls die Wellenlänge und/oder die Intensität - bei fokussiertem Laser insbesondere im Bereich der Tierhaut(oberfläche) - und/oder die Leistung und/oder die Fokusposition und/oder der Fokusdurchmesser genannt.

Es kann weiterhin vorgesehen sein, dass vor der Aufbringung des Codes die Dicke der Tierhaut messtechnisch erfasst wird und die Parameter des wenigstens einen Laserstrahls in Abhängigkeit der Dicke der Tierhaut insbesondere automatisiert gewählt werden. Dann wird besonders zuverlässig gewährleistet, dass die Laserstrahlung die Tierhaut nicht durchdringt und nur im Bereich der Oberfläche eine Veränderung zwecks Codierung verursacht wird. Die messtechnische Erfassung der Dicke der Tierhaut kann insbesondere erfolgen, nachdem die Tierhaut bereits in einer Aufnahmeeinrichtung bereitgestellt wurde, wofür geeignete Mittel zur Erfassung der Dicke vorgesehen sein können. Dabei wird in Abhängigkeit der Dicke bevorzugt zumindest die Position des Laserfokus entlang der optischen Achse des wenigstens einen Laserstrahls in Bezug auf diejenige Seite der Tierhaut, auf welche der wenigstens eine Laserstrahl gerichtet ist, angepasst, was durch ein Verfahren der Lasereinrichtung bzw. wenigstens einen optischen Elements dieser und/oder durch ein Verfahren der Aufnahmeeinrichtung entlang der optischen Achse des wenigstens einen Laserstrahls erreicht werden kann.

Der wenigstens eine Laserstrahl, der erfindungsgemäß zum Einbrennen des Codes verwendet wird, kann sich beispielsweise durch eine Wellenlänge im Bereich von 9 bis 11 Mikrometer oder im Bereich von 1 bis 1,1 Mikrometer auszeichnen. Lediglich beispielhaft sei ein CO₂-Laser oder auch ein Faserlaser oder Nd:Yag-Laser genannt, die sich allesamt allein oder in Kombination eignen, um im Rahmen des erfindungsgemäßen Verfahrens zum Einsatz zu kommen.

Die Leistung des wenigstens eine Laserstrahls wird gemäß einer weiteren Ausführungsform - insbesondere in Abhängigkeit der Dicke der zu markierenden Tierhaut -auf einen Wert im Bereich von 50 bis 1000 W, insbesondere im Bereich von 100 bis 400 W, bevorzugt im Bereich von 200 bis 350 W eingestellt.

Auch kann vorgesehen sein, dass der wenigstens eine Laserstrahl zum Einbrennen des Codes durch Betätigung wenigstens eines Schalters und/oder durch Spracheingabe und/oder durch Bereitstellung einer Tierhaut oder eines Abschnittes einer Tierhaut aktiviert wird. Die Spracheingabe beziehungsweise die Betätigung des Schalters erfolgt dann insbesondere durch einen Benutzer. Durch diesen kann auch manuell die Tierhaut an einer Aufnahmeeinrichtung einer Vorrichtung, die zur erfindungsgemäßen Aufbringung eines Codes mittels Laserstrahlung ausgebildet ist, beispielsweise auf einer Plattform, bereitgestellt werden.

Gegenstand der Erfindung ist ferner eine Vorrichtung zum Aufbringen eines Codes auf eine unbehandelte oder behandelte Tierhaut zur Durchführung des Verfahrens nach einem der vorhergehenden Ansprüche, umfassend
- ein Gehäuse, das einen Bearbeitungsbereich definiert,
- eine in dem Bearbeitungsbereich angeordnete, über eine insbesondere schlitzförmige Gehäusezugangsöffnung zugängliche Aufnahmeeinrichtung, die ausgebildet ist, um zumindest einen zu bearbeitenden Abschnitt einer Tierhaut aufzunehmen,
- eine zumindest teilweise in dem Gehäuse angeordnete, der Aufnahmeeinrichtung gegenüberliegende Lasereinrichtung, die ausgebildet ist, um wenigstens einen Laserstrahl in Richtung der Aufnahmeeinrichtung zu emittieren, und
- eine mit der Lasereinrichtung und/oder der Aufnahmeeinrichtung gekoppelte Steuerung, welche ausgebildet ist, um die Lasereinrichtung und/oder die Aufnahmeeinrichtung derart anzusteuern, dass mit dem wenigstens einen Laserstrahl ein der Steuerung übermittelter oder von dieser generierter Code in einen an der Aufnahmeeinrichtung angeordneten Tierhautabschnitt eingebrannt wird, insbesondere im Rahmen einer Relativbewegung zwischen der Lasereinrichtung und der Aufnahmeeinrichtung.

Die erfindungsgemäße Vorrichtung ist besonders geeignet, um das erfindungsgemäße Verfahren durchzuführen.

Um Codes beliebiger Form einbrennen zu können, ist die Anordnung zweckmäßiger Weise derart getroffen, dass die Lasereinrichtung, oder zumindest ein optisches Element dieser, und die Aufnahmeeirichtung relativ zueinander bewegbar sind. Die Relativbewegung zur Code-Herstellung zwischen Lasereinrichtung und Aufnahmeeinrichtung wird bevorzugt durch eine Bewegung der Lasereinrichtung bzw. wenigstens einen optischen Elementes dieser gegenüber einer ruhenden Aufnahmeeinrichtung realisiert. Bei der Aufnahmeeinrichtung kann es sich beispielsweise um eine Plattform handeln, auf deren bevorzugt horizontal orientierter Oberseite ein Tierhautabschnitt angeordnet werden kann.

Die erfindungsgemäße Vorrichtung weist eine Fixiereinrichtung auf, um einen an der Aufnahmeeinrichtung angeordneten Tierhautabschnitt lösbar zu fixieren. Alternativ oder zusätzlich können Spannmittel vorgesehen sein, um einen an der Aufnahmeeinrichtung angeordneten Tierhautabschnitt zu spannen. Die Fixiereinrichtung umfasst in bevorzugter Ausführung wenigstens einen Niederhalter, mittels dem ein an der Aufnahmeeinrichtung angeordneter Tierhautabschnitt zur vorübergehenden Fixierung gegen eine Wandung - im Falle einer Plattform beispielsweise gegen deren Oberseite - gedrückt werden kann bzw. wird. Für eine besonders gleichmäßige Fixierung um den Bearbeitungsbereich, kann der Niederhalter zum Beispiel die Form eines Ringes, etwa mit rundem und mehreckigem Querschnitt, aufweisen.

Alternativ oder zusätzlich dazu, dass die Fixiereinrichtung einen Niederhalter umfasst, kann diese auch ausgebildet sein, um insbesondere im Bereich der Aufnahmeeinrichtung einen Unterdruck zu erzeugen, über welchen ein an der Aufnahmeeinrichtung angeordneter Tierhauabschnitt insbesondere van der Aufnahmeeinrichtung fixiert wird. Ist eine Plattform als Aufnahmeeinrichtung vorgesehen, umfasst die Fixiereinrichtung insbesondere Mittel, um einen Unterdruck im Bereich unterhalb eines auf der Plattform angeordneten Tierhautabschnittes zu erzeugen, wodurch der Tierhautabschnitt an die Ablagefläche auf der Plattform angezogen und hierüber fixiert wird.

Darüber hinaus kann die erfindungsgemäße Vorrichtung eine Messeinrichtung umfassen, die ausgebildet ist, um eine Dicke eines an der Aufnahmeeinrichtung angeordneten Tierhautabschnitts zu messen.

Die Messeinrichtung kann insbesondere integral mit der Fixiereinrichtung ausgebildet sein. Für den Fall, dass die Fixiereinrichtung einen Niederhalter umfasst, der zur Fixierung gegen einen Tierhautabschnitt gedrückt wird, kann die Messung der Dicke der Tierhaut beispielsweise unmittelbar über den Niederhalter erfolgen, indem die Position oder Weglänge, in welcher dieser einen ersten Widerstand "spürt" erfasst und aus dieser auf den Abstand zwischen der mit dem Code zu versehenden Seite der Tierhaut zu der Auflagefläche der Tierhaut an der Aufnahmeeinrichtung, beispielsweise der Oberseite einer als solche dienenden Plattform, geschlossen wird. Alternativ oder zusätzlich können auch optische Sensoren zur Messung der Dicke der Tierhaut zum Einsatz kommen.

Auch kann eine Absaugeinrichtung vorgesehen sein, welche ausgebildet ist, um Rauch und/oder Gase, die infolge des Einbrennens eines Codes in eine Tierhaut mittels des wenigstens einen Laserstrahls entstehen, aus dem Gehäuse abzusaugen. Über die Absaugeinrichtung kann u.a. die Lasereinrichtung, insbesondere deren optische Elemente, vor bearbeitungsbedingt entstehendem Rauch und/oder Gas geschützt werden. Für eine besonders effiziente Absaugung kann der Bearbeitungsbereich zumindest seitlich von einem Abschirmkörper begrenzt werden, in dessen Innenraum ein Absaugrohr mündet. Der Abschirmkörper kann beispielsweise durch einen kegelstumpf-oder zylinderförmigen Hohlkörper mit offenen Stirnseiten gebildet sein, durch welche der Strahlengang des wenigstens einen Laserstrahls verläuft. Die Absaugeinrichtung kann mit der Steuerung gekoppelt sein und beispielsweise von dieser automatisch aktiviert werden, sobald ein Einbrennvorgang eines Codes auf einen an der Aufnahmeeinrichtung angeordneten Tierhautabschnitt beginnt, sowie automatisch deaktiviert werden, sobald dieser abgeschlossen wurde, wobei die Deaktivierung für eine besonders zuverlässige Entfernung von Rauch und/oder Gasen auch mit Verzögerung erfolgen kann.

Eine weitere Ausführungsform zeichnet sich durch eine mit der Steuerung gekoppelte Schutzeinrichtung aus, die ausgebildet ist, um zu schützende Objekte im Bearbeitungsbereich, bei denen es sich insbesondere um die Hand bzw. Hände eines Benutzers handeln kann, zu erfassen und bei Erfassung eines zu schützenden Objektes im Bearbeitungsbereich ein Signal an die Steuerung zu übergeben, um eine Aktivierung der Lasereinrichtung und/oder eine Betätigung der Fixiereinrichtung zu verhindern bzw. zu unterbrechen. Mit Hilfe der Schutzeinrichtung kann eine besonders hohe Benutzersicherheit gewährleistet werden. Auch die Schutzeinrichtung kann integral mit der Fixiereinrichtung ausgebildet sein. Umfasst die Schutzeinrichtung einen Niederhalter, kann die Hinderniserfassung beispielsweise mittels des Niederhalters erfolgen, indem erfasst wird, ob dieser bei einer Bewegung in Richtung der Aufnahmeeinrichtung einen Widerstand "spürt", also ein Hindernis vorliegt, bevor er einen vorgegebenen Abstand erreicht - ab dem davon auszugehen ist, dass er in Anlage an eine an der Aufnahmeeinrichtung angeordnete zu codierende Tierhaut kommt. Für diese Erfassung umfasst die Schutzeinrichtung dann zweckmäßiger Weise geeignete Mittel. Der vorgegebene Abstand kann dann in Abhängigkeit einer zu erwartenden (maximalen) Dicke bzw. eines Bereiches zu erwartender Dicken der zu codierenden Tierhäute gewählt werden. Die Dicke von Rinderhäuten im Rohzustand kann beispielsweise im Bereich von 1 bis 2 cm liegen. Der vorgegebene Abstand kann dann beispielsweise zwischen 2 bis 3 cm gewählt werden. Andere Dicken zu codierender Tierhäute sind selbstverständlich ebenfalls möglich und der vorgegebene Abstand kann dann entsprechend gewählt werden.

Entlang der Oberseite und/oder Unterseite der Gehäusezugangsöffnung können sich ferner Einführhilfen erstrecken, welche die Positionierung einer Tierhaut bzw. eines Tierhautabschnittes an der Aufnahmeeinrichtung in dem Gehäuse erleichtern.

In Weiterbildung erstreckt sich die sich die Gehäusezugangsöffnung über die gesamte Breite des Gehäuses und/oder weist die Gehäusezugangsöffnung eine Höhe von mindestens 1,5 cm, bevorzugt mindestens 2 cm, besonders bevorzugt mindestens 5 cm auf.

Weiterhin kann die Lasereinrichtung der erfindungsgemäßen Vorrichtung ausgebildet sein, um wenigstens ein Laserstrahl mit einer Wellenlänge im Bereich von 9 bis 11 Mikrometer oder im Bereich von 1 bis 1,1 Mikrometer zu emittieren. Lediglich beispielhaft sei ein CO₂-Laser oder auch ein Faserlaser oder Nd:Yag-Laser genannt.

Ferner kann vorgesehen sein, dass die Lasereinrichtung ausgebildet ist, um wenigstens einen Laserstrahl zu emittieren, der sich durch eine Laserleistung im Bereich von 50 bis 1000 W, insbesondere im Bereich von 100 bis 400 W, bevorzugt im Bereich von 200 bis 350 W auszeichnet.

Um einen ursprünglichen Code auszulesen, welcher einem Tier bereits zu Lebzeiten zugeordnet war und sich zum Beispiel auf einer Ohrmarke oder einem Aufkleber oder unmittelbar auf der Tieroberfläche befindet, kann die erfindungsgemäße Vorrichtung ferner Auslesemittel, beispielsweise eine geeignete Scaneinrichtung, aufweisen.

Schließlich kann die erfindungsgemäße Vorrichtung für einen besonders flexiblen Einsatz mobil ausgestaltet sein. Hierzu kann sie beispielsweise arretierbare Rollen aufweisen, um bequem und mit geringem Zeitaufwand bewegt werden zu können.

In der Zeichnung ist die Erfindung anhand eines Ausführungsbeispiels näher veranschaulicht. Es zeigen:
- Figur 1: eine Vorrichtung zum Aufbringen eines Codes auf eine unbehandelte oder behandelte Tierhaut gemäß der vorliegenden Erfindung in rein schematischer Darstellung von der Seite und
- Figur 2: die Vorrichtung aus Figur 1 in einer frontalen Ansicht in rein schematischer Darstellung.

Um Produkte aus Tierhaut, insbesondere Lederprodukte, mit höchster Zuverlässigkeit über die gesamte Verarbeitungskette bis hin zum einzelnen Tier lückenlos rückverfolgbar zu machen, werden Tierhäute im Anschluss an den Häutungsprozess unter Verwendung von Laserstrahlung mit einem Code versehen.

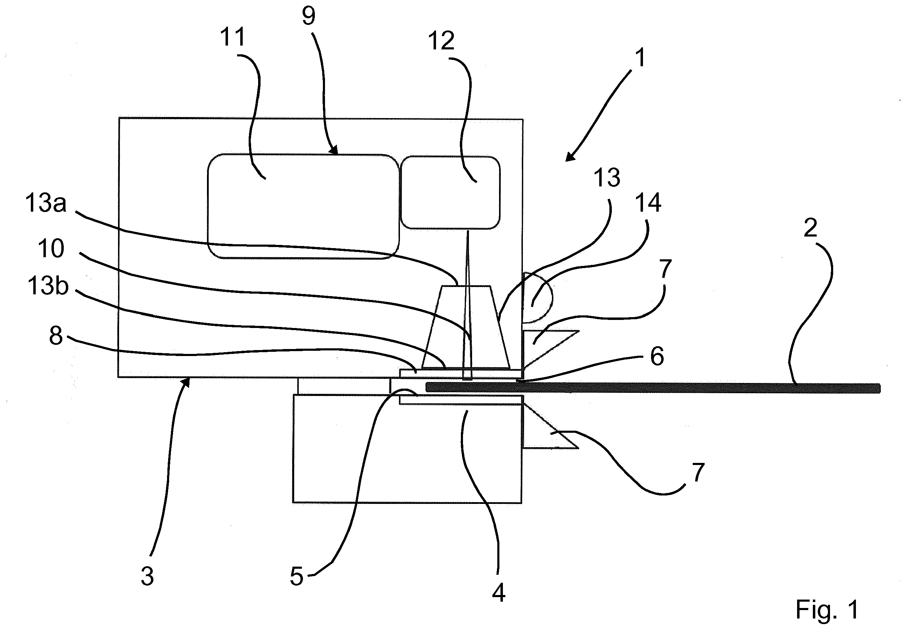

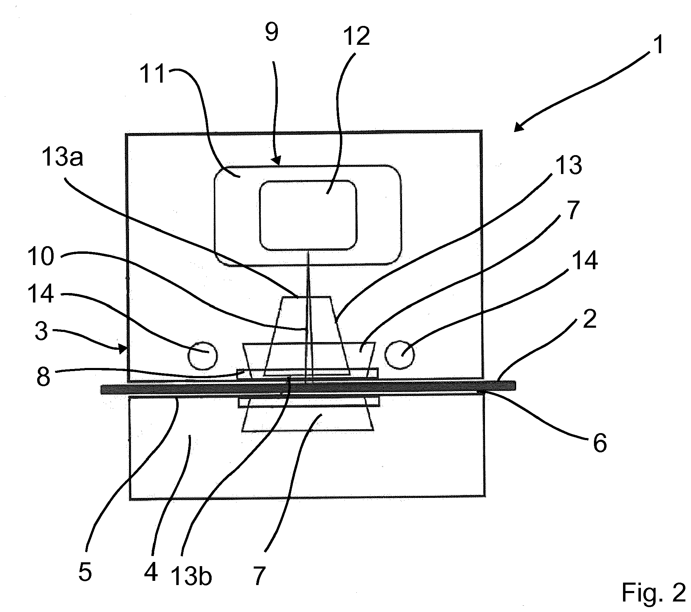

Hierzu kommt die in den Figuren 1 und 2 rein schematisch dargestellte Vorrichtung 1 zum Aufbringen eines Codes auf eine unbehandelte oder behandelte Tierhaut 2 zum Einsatz.

Diese umfasst ein Gehäuse 3, welches einen Bearbeitungsbereich definiert, in welchem eine Aufnahmeeinrichtung 4, die ausgebildet ist, um einen zu bearbeitenden Abschnitt einer Tierhaut 2 aufzunehmen, angeordnet ist. Bei dem dargestellten Ausführungsbeispiel wird die Aufnahmeeinrichtung 4 durch eine in der unteren Hälfte des Gehäuses 3 angeordnete Plattform 4 gebildet, oberhalb derer sich der Bearbeitungsbereich erstreckt und auf deren Oberseite 5 ein Abschnitt einer Tierhaut 2 angeordnet werden kann. Die Plattform 4 ist über eine vorliegend schlitzförmige Gehäusezugangsöffnung 6 von der in Figur 1 nach rechts weisenden Vorderseite der Vorrichtung 1 sowie der in Figur 2 nach links weisenden linken Seite und in der Figur 2 nach rechts weisenden rechten Seite der Vorrichtung 1 her zugänglich. Durch die schlitzförmige Gehäusezugangsöffnung 6 kann eine Tierhaut 2 von einem Benutzer zumindest teilweise in das Gehäuse 3 eingeführt und auf der Oberseite der Plattform 4 abgelegt werden. Die Gehäusezugangsöffnung 6 erstreckt sich über des gesamte Breite des Gehäuses 3 und weist vorliegend eine Höhe von 10 cm auf, so Tierhäute 2 einiger Zentimeter Dicke bequem durch diese zu der Plattform 4 geführt werden können. Entlang der Oberseite und der Unterseite der Gehäusezugangsöffnung 6 erstreckt sich jeweils eine Einführhilfe 7, konkret ein Führungskörper mit keilförmigem Profil. Die beiden Führungskörper 7 sind - wie in der Figur 1 erkennbar - derart angeordnet, dass diese einen der Gehäusezugangsöffnung 6 vorgelagerten, sich in Richtung der Gehäusezugangsöffnung 6 verjüngenden Einführbereich bilden.

Eine Tierhaut 2, konkret eine Rinderhaut 2, von der ein Abschnitt durch die Gehäusezugangsöffnung 6 zu der Plattform 4 geführt wurde, ist in den Figuren 1 und 2 dargestellt.

Die Vorrichtung 1 weist weiterhin eine Fixiereinrichtung auf, die ausgebildet ist, um einen an der Plattform 4 angeordneten Tierhautabschnitt für die Dauer eines Bearbeitungsprozesses zu fixieren. Bei dem dargestellten Ausführungsbeispiel umfasst die Fixiereinrichtung einen Niederhalter 8, mittels dem ein an der Plattform 4 angeordneter Tierhautabschnitt zur vorübergehenden Fixierung gegen die Oberseite 5 der Plattform 4 gedrückt werden kann. Für eine besonders gleichmäßige Fixierung um den Bearbeitungsbereich, ist der Niederhalter 8 vorliegend kreisringförmig ausgebildet. Der Niederhalter 8 ist bewegbar in dem Gehäuse 3 gehalten und diesem ist ein in den Figuren nicht dargestellter Motor der Fixiereinrichtung zugeordnet, über welchen eine Bewegung des Niederhalters 8 auf die Plattform 4 zu und von der Plattform 4 weg motorisiert durchgeführt werden kann. Der Motor ist mit einer in den Figuren ebenfalls nicht dargestellten zentralen Steuereinrichtung der Vorrichtung 1 gekoppelt, über welche der Niederhalter angesteuert wird. Alternativ zu dem Motor kann auch eine Pneumatik mit Federantrieb zum Einsatz kommen.

Die Anordnung ist bei dem dargestellten Ausführungsbeispiel ferner derart getroffen, dass eine vorrübergehende Fixierung eines auf der Plattform 4 angeordneten Tierhautabschnittes durch den Niederhalter 8 automatisiert bewirkt wird, wenn ein Tierhautabschnitt von einem Benutzer auf der Plattform 4 angeordnet wird. Hierfür sind geeignete Erfassungssensoren vorgesehen, mittels denen die Positionierung eines Tierhautabschnittes auf der Plattform 4 erfasst werden kann. Die Erfassungssensoren sind ebenfalls mit der Steuereinrichtung gekoppelt und gegen an diese ein Signal aus, wenn ein Tierhautabschnitt auf der Plattform 4 registriert wird.

Die Vorrichtung 1 umfasst weiterhin eine Messeinrichtung, die ausgebildet ist, um eine Dicke eines an der Plattform 4 angeordneten Tierhautabschnitts zu messen. Vorliegend ist die Messeinrichtung integral mit der Fixiereinrichtung ausgebildet. Dabei ist die Anordnung derart, dass die Messung einer Dicke der Tierhaut 2 unmittelbar über den Niederhalter 8 erfolgen kann, indem die Position, in welcher dieser - nach dem Erreichen des vorgegebenen Abstandes von vorliegend 2,5 Zentimetern - einen ersten Widerstand "spürt" erfasst wird und aus dieser Position auf den Abstand zwischen der mit dem Code zu versehenden Oberseite der Tierhaut 2 zu der Oberseite 5 der Plattform 4 und somit die Dicke geschlossen wird. Für die Positionserfassung des Niederhalters 8 umfasst die Messeinrichtung geeignete, in den Figuren nicht dargestellte Mittel. Alternativ oder zusätzlich kann die Messeinrichtung optische Sensoren umfassen, über welche eine Messung der Dicke möglich ist.

Die Vorrichtung 1 weist ferner eine ebenfalls in dem Gehäuse 3, konkret dessen oberer Hälfte, angeordnete Lasereinrichtung 9, die der Plattform 4 gegenüber liegt. Die Lasereinrichtung 9 ist ausgebildet, um einen Laserstrahl 10 in Richtung der Plattform 4, konkret deren Oberseite 5, zu emittieren. Die Lasereinrichtung 9 umfasst einen Laser 11, mittels dem der Laserstrahl 10 erzeugt wird sowie eine Laserscaneinrichtung 12, mittels derer der Laserstrahl 10 um 90° in Richtung der Plattform 4 umgelenkt wird.

Bei dem Laser 11 handelt es sich um einen CO₂-Laser, der vorliegend einen Laserstrahl 10 mit einer Wellenlänge von 10,6 Mikrometern emittiert. Der Laserstrahl 10 tritt bei dem dargestellten Ausführungsbeispiel in etwa horizontal aus dem Laser 11 - in Figur 1 nach rechts - aus und in gleicher Richtung in die Laserscaneinrichtung 12 ein, was in den Figuren nicht dargestellt ist. Ein anders verlaufender Strahlengang zwischen Laser 11 und Laserscaneinrichtung 12 ist natürlich ebenfalls möglich. Der Laserstrahl 10 wird mittels der Scaneinrichtung 12 abgelenkt und in Richtung der Oberseite 5 der Plattform 4 geführt. Die Scaneinrichtung 12 ist ausgebildet, um den vertikal zwischen der Scaneinrichtung 12 und der Plattform 4 verlaufenden Abschnitt des Laserstrahls 10 in horizontaler Richtung entlang zweier Achsen, die vorliegend als x- und y-Achse bezeichnet werden, zu verfahren. Der von der Scaneinrichtung 12 zu der Oberseite 5 der Plattform 4 verlaufende Abschnitt des Laserstrahls 10 verläuft entlang der vertikal orientierten z-Achse. Bei dem dargestellten Ausführungsbeispiel wird der Laserstrahl 10 in an sich bekannter Weise in x- und y-Richtung verfahren, indem zwei in der Scaneinrichtung 12 angeordnete Umlenkspiegel, die in den Figuren nicht dargestellt sind, in x- und y-Richtung ausgelenkt werden. Der Laserstrahl 10 kann hierdurch entlang einer beliebigen Bahn in der horizontalen Ebene verfahren werden, wodurch Codes beliebiger Form mittels diesem in Abschnitte von Tierhäuten 2, welche nacheinander auf der Oberseite 5 der Plattform 4 angeordnet werden, eingebrannt werden können. Die Scaneinrichtung 12 umfasst ferner eine in den Figuren nicht dargestellte Fokussieroptik, mittels welcher der Laserstrahl 10 fokussiert wird. Die Fokusebene liegt bei dem dargestellten Ausführungsbeispiel in der Ausgangsposition ca. 2 Zentimeter oberhalb der Plattform 4 , da im vorliegenden Falle für die Rinderhäute 2 eine Dicke zwischen 1 bis 2 Zentimetern zu erwarten ist. Die Fokusposition kann entlang der optischen Achse variiert werden, wofür die Lasereinrichtung 9 entsprechend ausgebildet ist, um eine eventuell erforderliche Fokusnachführung zur Anpassung an andere Hautdicken auch automatisiert durchführen zu können.

Es ist ferner eine mit der Steuereinrichtung gekoppelte Schutzeinrichtung der Vorrichtung 1 vorgesehen, die ausgebildet ist, um zu schützende Objekte im Bearbeitungsbereich, bei denen es sich insbesondere um die Hand bzw. Hände eines Benutzers handeln kann, zu erfassen und bei Erfassung eines zu schützenden Objektes im Bearbeitungsbereich ein Signal an die integrierte Steuereinrichtung zu übergeben, um eine Aktivierung der Lasereinrichtung und/oder eine Betätigung der Fixiereinrichtung zu verhindern bzw. zu unterbrechen. Vorliegend ist die Schutzeinrichtung integral mit der Fixiereinrichtung ausgebildet und die Hinderniserfassung erfolgt mittels des Niederhalters 8. Hierzu umfasst die Schutzeinrichtung in den Figuren nicht dargestellte Mittel zur Erfassung, ob der Niederhalter 8, während er einer Bewegung in Richtung der Plattform 4 für eine Fixierung einer Tierhaut 2 ausführt, einen Widerstand "spürt", bevor er einen vorgegebenen Abstand von der Oberseite 5 der Plattform 4 erreicht. Der vorgegebene Abstand hängt von der zu erwartenden maximalen Dicke der zu bearbeitenden Tierhäute ab und kann insbesondere für Rinderhäute bevorzugt im Bereich von 2 bis 3 cm liegen. Vorliegend beträgt er 2,5 Zentimeter. "Spürt" der Niederhalter 8 vor Erreichen des vorgegebenen Abstandes einen Widerstand, ist davon auszugehen, dass sich zusätzlich zu einem Tierhautabschnitt ein Hindernis, beispielsweise die Hand eines den Tierhautabschnitt positionierenden Benutzers im Bereich oberhalb der Plattform 4 und somit im Bearbeitungsbereich befindet und die Fixierbewegung des Niederhalters 8 ist zu stoppen und eine Aktivierung der Lasereinrichtung 9 zu unterbinden. Alternativ oder zusätzlich kann die Schutzeinrichtung auch optische Sensoren umfassen, mittels denen der über die schlitzförmige Gehäusezugangsöffnung 6 zugängliche Bereich oberhalb der Plattform 4 auf das Vorhandensein von Hindernissen überwacht wird.

Die erfindungsgemäße Vorrichtung 1 umfasst darüber hinaus eine Absaugeinrichtung welche ausgebildet ist, um Rauch und/oder Gase, welche infolge des Einbrennens eines Codes in die Tierhaut 2 mittels der Lasereinrichtung 9 entstehen, abzusaugen. Diese umfasst einen zwischen der Plattform 4 und der Lasereinrichtung 9 angeordneten Hohlkörper 13, der zwei einander gegenüberliegende offene Stirnseiten 13a, 13b aufweist, und Hohlkegelstumpf-förmig ausgebildet ist. Der Hohlkörper 13 umschließt den unteren Teil desjenigen Abschnitts des Strahlengangs, und somit bei aktviertem Laser 11 des Laserstrahls 10, welcher sich von der Scaneinrichtung 12 bis zu der Plattform 4 erstreckt. Der Laserstrahl 10 tritt durch die obere offene Stirnseite 13a in den Hohlkörper 13 ein und verlässt diesen durch die untere Stirnseite 13b wieder, um auf einen auf der Plattform 4 bereitgestellten Tierhautabschnitt zu treffen. Mit dem Hohlkörper 13 ist über ein in den Figuren nicht dargestelltes, in den Innenraum des Hohlkörpers 13 mündendes Absaugrohr ein in den Figuren ebenfalls nicht dargestellter Ventilator der Absaugeinrichtung verbunden, über welchen Rauch und Gase aus dem Innenraum des Hohlkörpers 12 abgesaugt werden können.

An der in Figur 1 nach rechts und in Figur 2 nach vorne weisenden Vorderseite des Gehäuses 3 sind zwei Schalter 14 vorgesehen, über welche von einem Benutzer ein Herstellungsvorgang eines Codes auf einen auf Oberseite 5 der Plattform 4 Positioniertenn Abschnitt einer Tierhaut 2 gestartet werden kann. Zusätzlich zu der Schutzeinrichtung sind bei dem dargestellten Ausführungsbeispiel für eine besonders hohe Benutzersicherheit zwei Schalter 14 vorgesehen, welche von einem Benutzer gleichzeitig zu drücken sind, um das Einbrennen eines Codes in eine Tierhaut 2 zu starten, also die Lasereinrichtung 9 zu aktivieren.

Zur Durchführung des erfindungsgemäßen Verfahrens wird zunächst eine zu codierende Tierhaut 2, bei der es sich vorliegend um eine Rinderhaut im Rohzustand, die noch das Fett und das Fell aufweist, bereitgestellt und dieser wird ein eindeutiger Code zugeordnet und an die Steuereinrichtung übergeben. Bei dem dargestellten Ausführungsbeispiel handelt es sich um einen neunstelligen Zahlencode, welcher dem zu der Tierhaut 2 gehörigen Tier bereits zu Lebzeiten zugeordnet war. Dieser ursprüngliche Code wurde noch vor dem Häutungsvorgang mit geeigneten technischen Hilfsmitteln ausgelesen.

Derjenige Abschnitt der Tierhaut 2, welcher mit dem Code zu versehen ist, wird von einem Benutzer durch die schlitzförmige Gehäusezugangsöffnung 6 in das Gehäuse 3 eingeschoben und auf der Oberseite 5 der Plattform 4 abgelegt. Der Tierhautabschnitt wird dabei derart eingeführt, dass die Oberseite der Tierhaut 2, welche zu Lebzeiten des Rindes die Felloberfläche gebildet hat, nach oben zeigt, also der Lasereinrichtung 9 zugewandt ist. Die keilförmigen Führungskörper 7 helfen bei der Einführung des Tierhautabschnittes in das Gehäuse 3.

Ausgelöst durch die Platzierung der Tierhaut 2 auf der Plattform 4 wird der Niederhalter 8 in Richtung der Plattform 4 bewegt und, wenn bis zu dem vorgegebenen Abstand kein Hindernis registriert wird, gegen den auf der Plattform 4 liegenden Abschnitt der Tierhaut 2 gedrückt, um diesen zu fixieren.

Die Dicke des auf der Plattform 4 positionierten Tierhautabschnittes wird mit der Messeinrichtung - über die Positionserfassung des Niederhalters 8 beim ersten "spüren" eines Widerstandes unterhalb des vorgegebenen Abstandes von 2,5 Zentimetern - gemessen und die Leistung des Laserstrahls 10 wird bei dem dargestellten Ausführungsbeispiel in Abhängigkeit der gemessenen Dicke gewählt. Vorliegend wird, je nach gemessener Dicke, eine Laserleistung im Bereich von 200 bis 300 W gewählt. Alternativ oder zusätzlich zu einer Anpassung der Laserleistung kann auch die Position des Laserfokus in Bezug auf die Tierhaut 2 in Richtung der optischen Achse des Laserstrahls 10 variiert werden.

Die Leistung wird dabei in Abhängigkeit der gemessenen Dicke der Tierhaut 2 derart gewählt, dass mittels dem Laserstrahl 10 eine nur oberflächliche Veränderung der Tierhaut 2 erzielt wird, der Laserstrahl 1 die Tierhaut 2 gegebener Dicke jedoch nicht durchbohrt und somit keine Löcher in dieser entstehen. Bevorzugt wird die Laserleistung konkret derart gewählt, dass sich im Bereich des hergestellten Codes eine laserbedingte Materialabtragung mit einer Tiefe im Bereich von 0,5 bis 5 mm ergibt. Vorliegend ergibt sich eine Tiefe des eingebrannten Zahlencodes von 3 mm.

Nach der manuellen Positionierung des Tierhautabschnittes durch einen Benutzer und der automatischen Fixierung dieses mit dem Niederhalter 8 werden von dem Benutzer die beiden Schalter 14 zum Starten des Herstellungsvorgangs eines Codes auf der Tierhaut 2 gedrückt. Die Lasereinrichtung 9 wird infolge dessen aktiviert und, währen er aktiviert ist, mittels der Scaneinrichtung 12 entlang einer zu dem zugeordneten Code gehörigen Bahn verfahren, um den zugeordneten Code in den auf der Plattform liegenden Tierhautabschnitt einzubrennen. Da der zu erzeugende Code mehrere Ziffern umfasst, wird der Laserstrahl für den Übergang der jeweils letzten zur jeweils nächsten Ziffer vorübergehend deaktiviert.

Der infolge des Einbrennens des Codes entstehender Rauch und die entstehenden Gase werden mittels der Absaugeinrichtung abgesaugt, die automatisch von der Steuereinrichtung aktiviert wurde.

Nachdem der Code unter Verwendung der Laserstrahlung vollständig hergestellt wurde, wird die Lasereinrichtung automatisch deaktiviert und der Niederhalter 8, welcher die Tierhaut 2 an der Plattform 4 fixiert, wird automatisch hochgefahren, also die Fixierung gelöst. Der Benutzer entnimmt die mit dem Code versehen Tierhaut 2 und es kann sich ein weiterer Codiervorgang einer weiteren Tierhaut 2 unmittelbar anschließen.

Der unter Durchführung des erfindungsgemäßen Verfahrens und unter Verwendung der erfindungsgemäßen Vorrichtung mittels Laserstrahlung erzeugte Code zeichnet sich durch eine hervorragende Haltbarkeit aus. Infolge dessen übersteh er die sich zur Herstellung von Leder anschließenden Bearbeitungsprozesse der Tierhaut 2 unbeschadet und kann auch am Ende der Verarbeitungskette noch von einem Menschen oder einer Maschine ausgelesen werden, so dass die Nachverfolgbarkeit bis zum einzelnen Tier lückenlos gewährleitet ist.

## Patentansprüche

1. Verfahren zum Aufbringen eines Codes auf eine unbehandelte oder behandelte Tierhaut (2), bei dem
- eine von einem Tier abgetrennte, zu codierende Tierhaut (2) bereitgestellt wird,
- der Tierhaut (2) ein eindeutiger Code zugeordnet wird,
- der zugeordnete Code auf die Tierhaut (2) aufgebracht wird,
**dadurch gekennzeichnet, dass**
- die Tierhaut wenigstens einem Laserstrahl (10) derart ausgesetzt wird, dass der zugeordnete Code mittels des wenigstens einen Laserstrahls (10) in die Tierhaut (2) eingebrannt wird, wobei die Parameter des wenigstens einen Laserstrahls (10) derart gewählt werden, dass der wenigstens eine Laserstrahl (10) die Tierhaut (2) nicht durchtrennt.

2. Verfahren nach Anspruch 1, **dadurch gekennzeichnet, dass** der der Tierhaut (2) zugeordnete Code einem Code entspricht, der dem zu der Tierhaut (2) gehörigen Tier bereits zu Lebzeiten zugeordnet war oder diesen repräsentiert.

3. Verfahren nach Anspruch 2, **dadurch gekennzeichnet, dass** der Code, der dem zu der Tierhaut (2) gehörigen Tier bereits zu Lebzeiten zugeordnet war, mit geeigneten technischen Hilfsmitteln erfasst wird, und basierend auf dem erfassten Code der Code generiert wird, der auf die Tierhaut (2) aufzubringen ist.

4. Verfahren nach einem der vorhergehenden Ansprüche, **dadurch gekennzeichnet, dass** der Code in die Tierhaut (2) im Anschluss an den Häutungsprozess und vor der Durchführung weiterer Verarbeitungsschritte der Tierhaut (2) mittels des wenigstens einen Laserstrahls (10) eingebrannt wird.

5. Verfahren nach einem der vorhergehenden Ansprüche, **dadurch gekennzeichnet, dass** der Code auf der Oberseite der Tierhaut (2), welche zu Lebzeiten des Tieres die Haut- bzw. Felloberfläche gebildet hat, mittels des wenigstens einen Laserstrahls (10) eingebrannt wird.

6. Verfahren nach einem der vorhergehenden Ansprüche, **dadurch gekennzeichnet, dass** zumindest derjenige Bereich der Tierhaut (2), über welchen sich der zugeordnete Code erstrecken soll, vor der Aufbringung des Codes fixiert und/oder gespannt wird.

7. Verfahren nach einem der vorhergehenden Ansprüche, **dadurch gekennzeichnet, dass** vor der Aufbringung des Codes die Dicke der Tierhaut (2) messtechnisch erfasst wird und die Parameter des wenigstens einen Laserstrahls (10) in Abhängigkeit von der Dicke der Tierhaut (2) insbesondere automatisiert eingestellt werden.

8. Vorrichtung (1) zum Aufbringen eines Codes auf eine unbehandelte oder behandelte Tierhaut (2) zur Durchführung des Verfahrens nach einem der vorhergehenden Ansprüche, umfassend
- ein Gehäuse (3), das einen Bearbeitungsbereich definiert,
- eine in dem Bearbeitungsbereich angeordnete, über eine insbesondere schlitzförmige Gehäusezugangsöffnung (6) zugängliche Aufnahmeeinrichtung (4), die ausgebildet ist, um zumindest einen zu bearbeitenden Abschnitt einer Tierhaut (2) aufzunehmen, wobei eine Fixiereinrichtung vorgesehen ist, um einen an der Aufnahmeeinrichtung (4) angeordneten Tierhautabschnitt lösbar zu fixieren, und/oder Spannmittel vorgesehen sind, um einen an der Aufnahmeeinrichtung (4) angeordneten Tierhautabschnitt zu spannen,
- eine zumindest teilweise in dem Gehäuse (3) angeordnete, der Aufnahmeeinrichtung (4) gegenüberliegende Lasereinrichtung (9), die ausgebildet ist, um wenigstens einen Laserstrahl (10) in Richtung der Aufnahmeeinrichtung (4) zu emittieren, und
- eine mit der Lasereinrichtung (9) und/oder der Aufnahmeeinrichtung (4) gekoppelte Steuerung, welche ausgebildet ist, um die Lasereinrichtung (9) und/oder die Aufnahmeeinrichtung (4) derart anzusteuern, dass mit dem wenigstens einen Laserstrahl (10) ein der Steuerung übermittelter oder von dieser generierter Code in einen an der Aufnahmeeinrichtung (4) angeordneten Tierhautabschnitt eingebrannt wird, insbesondere im Rahmen einer Relativbewegung zwischen der Lasereinrichtung (9) und der Aufnahmeeinrichtung (4).

9. Vorrichtung (1) nach Anspruch 8, **dadurch gekennzeichnet, dass** eine Messeinrichtung vorgesehen ist, die ausgebildet ist, um eine Dicke eines an der Aufnahmeeinrichtung angeordneten Tierhautabschnitts zu messen, wobei die Messeinrichtung insbesondere integral mit der Fixiereinrichtung ausgebildet ist.

10. Vorrichtung (1) nach einem der Ansprüche 8 oder 9, **dadurch gekennzeichnet, dass** eine Absaugeinrichtung vorgesehen ist, welche ausgebildet ist, um Rauch und/oder Gase, die infolge des Einbrennens eines Codes in eine Tierhaut (2) mittels des wenigstens einen Laserstrahls (10) entstehen, aus dem Gehäuse (3) abzusaugen.

11. Vorrichtung (1) nach einem der Ansprüche 8 bis 10, **dadurch gekennzeichnet, dass** eine mit der Steuerung gekoppelte Schutzeinrichtung vorgesehen ist, die ausgebildet ist, um zu schützende Objekte im Bearbeitungsbereich, bei denen es sich insbesondere um die Hand bzw. Hände eines Benutzers handeln kann, zu erfassen und bei Erfassung eines zu schützenden Objektes im Bearbeitungsbereich ein Signal an die Steuerung zu übergeben, um eine Aktivierung der Lasereinrichtung (9) und/oder eine Betätigung der Fixiereinrichtung zu verhindern bzw. zu unterbrechen.

12. Vorrichtung (1) nach einem der Ansprüche 8 bis 11, **dadurch gekennzeichnet, dass** sich entlang der Oberseite und/oder Unterseite der Gehäusezugangsöffnung (6) eine Einführhilfe (7) erstreckt.

13. Vorrichtung (1) nach einem der Ansprüche 8 bis 12, **dadurch gekennzeichnet, dass** sich die Gehäusezugangsöffnung (6) über die gesamte Breite des Gehäuses (3) erstreckt und/oder dass die Gehäusezugangsöffnung (6) eine Höhe von mindestens 1,5 cm, bevorzugt mindestens 2 cm, besonders bevorzugt mindestens 5 cm aufweist.

14. Vorrichtung (1) nach einem der Ansprüche 8 bis 13, **dadurch gekennzeichnet, dass** die Lasereinrichtung (9) ausgebildet ist, um wenigstens einen Laserstrahl (10) zu emittieren, der sich durch eine Wellenlänge im Bereich von 9 bis 11 Mikrometer oder im Bereich von 1 bis 1,1 Mikrometer auszeichnet und/oder dass die Lasereinrichtung (9) ausgebildet ist, um wenigstens einen Laserstrahl (10) zu emittieren, der sich durch eine Laserleistung im Bereich von 50 bis 1000 W, insbesondere im Bereich von 100 bis 400 W, bevorzugt im Bereich von 200 bis 350 W auszeichnet.

## Claims

1. Process for applying a code to an untreated or treated animal skin (2) in which
- an animal skin (2) to be coded, separated from an animal, is provided,
- a unique code is assigned to the animal skin (2),
- the assigned code is applied to the animal skin (2),
**characterized in that**
the animal skin is exposed to at least one laser beam (10) in such a way that the associated code is burned into the animal skin (2) by means of the at least one laser beam (10), the parameters of the at least one laser beam (10) being selected in such a way that the at least one laser beam (10) does not cut through the animal skin (2).

2. Process according to claim 1, **characterized in that** the code assigned to the animal skin (2) corresponds to a code which was already assigned to or represents the animal belonging to the animal skin (2) during its lifetime.

3. Process according to claim 2, **characterized in that** the code which was already assigned to the animal belonging to the animal skin (2) during its lifetime is recorded with suitable technical means, and the code which is to be applied to the animal skin (2) is generated on the basis of the recorded code.

4. Process according to one of the preceding claims, **characterized in that** the code is burnt into the animal skin (2) by means of the at least one laser beam (10) following the skinning process and before carrying out further processing steps of the animal skin (2).

5. Process according to one of the preceding claims, **characterized in that** the code is burned in on the upper side of the animal skin (2), which has formed the skin surface during the lifetime of the animal, by means of the at least one laser beam (10).

6. Process according to one of the preceding claims, **characterized in that** at least that part of the animal skin (2) over which the associated code is to extend is fixed and/or tensioned before the application of the code.

7. Process according to one of the preceding claims, **characterized in that**, before the application of the code, the thickness of the animal skin (2) is detected by measurement and the parameters of the at least one laser beam (10) are set, in particular automatically, as a function of the thickness of the animal skin (2).

8. Device (1) for applying a code to an untreated or treated animal skin (2) for carrying out the method according to any of the preceding claims, comprising
- a housing (3) defining a machining region,
- a receiving device (4) which is arranged in the machining region, is accessible via a housing access opening (6), in particular a slot-shaped housing access opening, and is designed to receive at least one portion of an animal skin (2) to be machined, a fixing device being provided in order to releasably fix an animal skin portion arranged on the receiving device (4), and/or clamping means being provided in order to clamp an animal skin portion arranged on the receiving device (4),
- a laser device (9) which is arranged at least partially in the housing (3), lies opposite the receiving device (4) and is designed to emit at least one laser beam (10) in the direction of the receiving device (4), and
- a controller coupled to the laser device (9) and/or the receiving device (4), which controller is designed to control the laser device (9) and/or the receiving device (4) in such a way that a code transmitted to the controller or generated by it is burnt into an animal skin portion arranged on the receiving device (4) with the at least one laser beam (10), in particular in the context of a relative movement between the laser device (9) and the receiving device (4).

9. Device (1) according to claim 8, **characterized in that** a measuring device is provided which is designed to measure a thickness of an animal skin portion arranged on the receiving device, the measuring device being designed in particular integrally with the fixing device.

10. Device (1) according to one of claims 8 or 9, **characterized in that** an extraction device is provided which is designed to extract smoke and/or gases which are produced as a result of the burning of a code into an animal skin (2) by means of the at least one laser beam (10) from the housing (3).

11. Device (1) according to one of claims 8 to 10, **characterized in that** a protective device coupled to the controller is provided which is designed to detect objects to be protected in the processing area, in particular the hand or hands of a user, and to transmit a signal to the controller on detection of an object to be protected in the processing area, in order to prevent or interrupt activation of the laser device (9) and/or actuation of the fixing device.

12. Device (1) according to any of claims 8 to 11, **characterized in that** an applicator (7) extends along the top and/or bottom of the housing access opening (6).

13. Device (1) according to one of claims 8 to 12, **characterized in that** the housing access opening (6) extends over the entire width of the housing (3) and/or **in that** the housing access opening (6) has a height of at least 1.5 cm, preferably at least 2 cm, particularly preferably at least 5 cm.

14. Device (1) according to one of claims 8 to 13, **characterized in that** the laser device (9) is designed to emit at least one laser beam (10) which is **characterized by** a wavelength in the range from 9 to 11 micrometers or in the range from 1 to 1.1 micrometers and/or **in that** the laser device (9) is designed to emit at least one laser beam (10) which is **characterized by** a laser power in the range from 50 to 1000 W, in particular in the range from 100 to 400 W, preferably in the range from 200 to 350 W.

## Revendications

1. Procédé d'application d'un code sur une peau animale non traitée ou traitée (2) dans lequel
- une peau animale (2) à coder, séparée d'un animal, est prévue,
- un code unique est attribué à la peau animale (2),
- le code attribué est appliqué à la peau animale (2),
**caractérisé en ce que**
la peau animale est exposée à au moins un faisceau laser (10) de telle sorte que le code associé est brûlé dans la peau animale (2) au moyen du au moins un faisceau laser (10), les paramètres du au moins un faisceau laser (10) étant sélectionnés de telle sorte que le au moins un faisceau laser (10) ne coupe pas la peau animale (2).

2. Procédé selon la revendication 1, **caractérisé en ce que** le code attribué à la peau animale (2) correspond à un code qui a déjà été attribué ou qui représente l'animal appartenant à la peau animale (2) pendant sa vie.

3. Procédé selon la revendication 2, **caractérisé en ce que** le code qui a déjà été attribué à l'animal appartenant à la peau (2) de l'animal pendant sa vie est enregistré avec des moyens techniques appropriés et le code qui doit être appliqué à la peau animale (2) est généré sur la base du code enregistré.

4. Procédé selon l'une des revendications précédentes, **caractérisé en ce que** le code est brûlé dans la peau animale (2) au moyen d'au moins un faisceau laser (10) après le processus de dépouillement et avant l'exécution d'autres étapes de traitement de la peau animale (2).

5. Procédé selon l'une des revendications précédentes, **caractérisé en ce que** le code sur la face supérieure de la peau animale (2), qui a formé la surface de la peau pendant la vie de l'animal, est brûlé au moyen du au moins un faisceau laser (10).

6. Procédé selon l'une des revendications précédentes, **caractérisé en ce qu'**au moins la partie de la peau animale (2) sur laquelle le code associé doit s'étendre est fixée et/ou tendue avant application du code.

7. Procédé selon l'une des revendications précédentes, **caractérisé en ce que**, avant l'application du code, l'épaisseur de la peau animale (2) est détectée par mesure et les paramètres du au moins un faisceau laser (10) sont réglés, en particulier automatiquement, en fonction de l'épaisseur de la peau animale (2).

8. Dispositif (1) pour appliquer un code à une peau d'animal non traitée ou traitée (2) pour mettre en oeuvre le procédé selon l'une quelconque des revendications précédentes, comprenant
- un logement (3) définissant une zone d'usinage,
- un dispositif de réception (4) disposé dans la zone d'usinage, accessible par l'intermédiaire d'une ouverture d'accès du logement (6), en particulier une ouverture du logement en forme de fente, et destiné à recevoir au moins une partie d'une peau animale (2) à usiner, un dispositif de fixation étant prévu pour fixer de manière amovible une partie de peau animale disposée sur le dispositif de réception (4), et/ou un moyen de serrage étant prévu pour bloquer une partie de peau animale disposée sur le dispositif de réception (4),
- un dispositif laser (9) qui est disposé au moins partiellement dans le logement (3), est opposé au dispositif de réception (4) et est conçu pour émettre au moins un faisceau laser (10) dans la direction du dispositif de réception (4), et
- un contrôleur couplé au dispositif laser (9) et/ou au dispositif de réception (4), lequel contrôleur est conçu pour commander le dispositif laser (9) et/ou le dispositif de réception (4) de telle sorte qu'un code transmis au contrôleur ou généré par celui-ci est brûlé dans une partie de peau animale disposée sur le dispositif de réception (4) avec le au moins un faisceau laser (10), notamment dans le contexte d'un déplacement relatif entre le dispositif laser (9) et le dispositif de réception (4).

9. Dispositif (1) selon la revendication 8, **caractérisé en ce qu'**il est prévu un dispositif de mesure destiné à mesurer l'épaisseur d'une parité de peau animale disposée sur le dispositif récepteur, le dispositif de mesure étant conçu en particulier d'un seul tenant avec le dispositif de fixation.

10. Dispositif (1) selon l'une des revendications 8 ou 9, **caractérisé en ce qu'**il est prévu un dispositif d'extraction qui est conçu pour extraire de la fumée et/ou des gaz qui sont produits à la suite de la combustion d'un code dans une peau animale (2) au moyen du au moins un faisceau laser (10) du logement (3).

11. Dispositif (1) selon l'une des revendications 8 à 10, **caractérisé en ce qu'**il est prévu un dispositif de protection couplé au contrôleur qui est conçu pour détecter des objets à protéger dans la zone de traitement, en particulier la ou les mains d'un utilisateur, et pour transmettre un signal au contrôleur sur détection d'un objet à protéger dans la zone de traitement, pour empêcher ou interrompre l'activation du dispositif laser (9) et/ou la commande du dispositif de fixation.

12. Dispositif (1) selon l'une quelconque des revendications 8 à 11, **caractérisé en ce qu'**un auxiliaire d'insertion (7) s'étend le long du haut et/ou du bas de l'ouverture d'accès (6) du logement.

13. Dispositif (1) selon l'une des revendications 8 à 12, **caractérisé en ce que** l'ouverture d'accès du logement (6) s'étend sur toute la largeur du boîtier (3) et/ou **en ce que** l'ouverture d'accès du logement (6) a une hauteur d'au moins 1,5 cm, de préférence au moins 2 cm, particulièrement de préférence au moins 5 cm.

14. Dispositif (1) selon l'une des revendications 8 à 13, **caractérisé en ce que** le dispositif laser (9) est conçu pour émettre au moins un faisceau laser (10) qui est **caractérisé par** une longueur d'onde dans la plage de 9 à 11 micromètres ou dans la plage de 1 à 1,1 micromètres et/ou **en ce que** le dispositif laser (9) est conçu pour émettre au moins un faisceau laser (10) qui est **caractérisé par** une puissance laser dans la plage de 50 à 1000 W, en particulier dans la plage de 100 à 400 W, de préférence dans la plage de 200 à 350 W.
